**Europäisches Patentamt**

**European Patent Office**

**Office européen des brevets**

(11) Veröffentlichungsnummer: **0 276 495 B1**

## (12) EUROPÄISCHE PATENTSCHRIFT

(45) Veröffentlichungstag der Patentschrift: **29.04.92**

(21) Anmeldenummer: **87119413.0**

(22) Anmeldetag: **31.12.87**

(51) Int. Cl.⁵: **A61C 11/00**

(54) **Vorrichtung zum Einartikulieren von Kiefernmodellen.**

(30) Priorität: **24.01.87 DE 8701173 U**
**19.08.87 DE 8711262 U**

(43) Veröffentlichungstag der Anmeldung:
**03.08.88 Patentblatt 88/31**

(45) Bekanntmachung des Hinweises auf die
Patenterteilung:
**29.04.92 Patentblatt 92/18**

(84) Benannte Vertragsstaaten:
**AT BE CH DE ES FR GB GR IT LI LU NL SE**

(56) Entgegenhaltungen:
**DE-A- 1 491 103**
**DE-A- 3 420 182**
**US-A- 3 818 595**
**US-A- 3 896 550**

(73) Patentinhaber: **Schreiber, Hans, Dr.Dr.**
**Mierendorffstrasse 2**
**W-6940 Weinheim(DE)**

(72) Erfinder: **Schreiber, Hans, Dr.Dr.**
**Mierendorffstrasse 2**
**W-6940 Weinheim(DE)**

(74) Vertreter: **Ratzel, Gerhard, Dr.**
**Seckenheimer Strasse 36a**
**W-6800 Mannheim 1(DE)**

Rank Xerox (UK) Business Services
(-/2.18/2.0)

## Beschreibung

Die Erfindung betrifft eine Vorrichtung zur Einartikulierung von Kiefermodellen in die gängigsten Artikulatorsysteme.

Zur Anfertigung von Zahnprothesen bzw. Kronen und Brücken werden die zur weiteren Bearbeitung gefertigten Modelle in sogenannten Artiulatoren fixiert oder einartikuliert.

Das herkömmliche Befestigungsmedium ist dabei Gips, der eine räumliche Zuordnung der Modelle erlaubt. Ein wesentlicher Nachteil liegt hierbei in der Gipsexpansion, d.h. der Gips verändert während der Kristallisation (d.h. beim Aushärten) unkontrollierbar sein Volumen, so daß dies eine unerwünschte Toleranz des Arbeitsergebnisses zur Folge hat. Ein weiterer Nachteil liegt neben vielen anderen in der nicht unwesentlichen Abbindezeit des Gipses.

In der DE-OS 3 420 182 wird ein Artikulator beschrieben, bei dem der Modellteller über einen Verstellmechanismus an einem Träger festgelegt ist, wobei dieser Verstellmechanismus wenigstens eine Verstellbewegung des Modelltellers in einer Richtung senkrecht zum Träger zuläßt.

Damit kann die Zwischenschicht aus einem aushärtbaren Werkstoff, über die der Sockel eines Gebißmodells am Modellteller fixiert ist, dünner als üblich sein, so daß Ausrichtfehler durch die Abbindeexpansion des Werkstoffes der Zwischenschicht nicht mehr auftreten können.

Der Erfindung liegt die Aufgabe zugrunde, eine Vorrichtung zu schaffen, die den zusätzlichen Einsatz eines oder mehrerer Gipssockel erübrigt, indem die Modellplatte und damit das darauf fixierte Modell rein mechanisch einartikulierbar ist und aufgrund seiner konstruktiven Beschaffenheit keinen zusätzlichen Montagedruck auf die geometrische Stellung der Modelle ausübt, wobei die Anwendung der Vorrichtung in Kombination mit fast allen bereits bekannten Artikulatortypen möglich ist.

Beim Einartikulieren mit Gips kommt es in der Abbindephase durch den Kristallisationsprozeß zur Gipsexpansion, die in ihrem Ausdehnungsgrad abhängig von der Höhe des Gipssockels ist. Exakt arbeitende Labors minimieren diesen Effekt durch Einartikulieren in mehreren Gipsschichten, was natürlich die ohnedies zeitraubende Abbindezeit des Gipses, und dies ist ein weiterer Nachteil, vervielfacht.

Auch führt die dabei auftretende Verschmutzung der Artikulatoren, insbesondere das oft nach durchgeführter Arbeit erforderliche Herausschlagen der Modelle zur Beschädigung der Präzisionsinstrumente.

Eine falsche Bißlage kann nur dadurch korrigiert werden, daß einer der Gipssockel entfernt und das entsprechende Kiefermodell nach erneutem Registrat mittels Gips einartikuliert wird. Diese zeitraubende Prozedur macht in den meisten Fällen einen erneuten Sitzungstermin für den Patienten notwendig, wobei nach korrigierter prothetischer Arbeit noch lange nicht gewährleistet ist, daß der Patient beim letzten Registrat die richtige Kieferlage eingenommen hat.

Als weitere Nachteile sind aufzuführen, daß die Gipsträgerplatten der Artikulatoren nur wenige Male wiederverwendbar sind, daß allein das Anrühren des Gipses einen Zeitverlust bedeutet und anschließend Reinigungsarbeiten notwendig macht.

Vorliegender Erfindung liegen also die folgenden Einzelaufgaben zugrunde:

1. Verhinderung einer Gipsexpansion;
2. Ermöglichung einer leichten Bißlagekorrektur durch den Zahnarzt am Behandlungsstuhl;
3. Erreichen eines höheren Präzisionsgrades der prothetischen Arbeit;
4. Erreichen einer Kostenreduktion auch für die Fälle, bei denen die Modellherstellung vom Labor durchgeführt wird, da die Möglichkeit geschaffen wird, einen den Patienten wenig beeinträchtigenden zusätzlichen Sitzungstermin zur Bißlagenkontrolle und gegebenenfalls Bißlagenkorrektur einzurichten;
5. Schaffung der Möglichkeit der Kompatibilität mit den gängigsten Artikulatorsystemen;
6. Einartikulierung von sowohl herkömmlichen Modellen, als auch neueren Modellsystemen;
7. Schonung der teuren Artikulatoren;
8. Verhinderung von Zeitverlust durch Anrühren von Gips und anschließende Reinigungsarbeiten;
9. Schaffung einer Vorrichtung, die viele Male wiederverwendbar ist.

Diese Aufgaben werden erfindungsgemäß durch eine Vorrichtung zum einartikulieren von Kiefermodellen gelöst, die eine räumlich justierbare Modelplatte und eine Artikulator-Basisplatte aufweist und dadurch gekennzeichnet ist, daß die Modellplatte zwischen zwei auf der Basisplatte in Längs- und Querrichtung verfahrbaren und axial verdrehbaren Keilen angeordnet ist. Diese Keile weisen schlittenartig in der Neigung der Keile verfahrbare Fixationselemente auf, die durch Verschraubung in der Neigung der Keile in bestimmter Lage arretierbar sind, wobei die Modellplatte an die Keile angepreßt und fixiert wird.

Eine besonders bevorzugte Ausführungsform ist dadurch gekennzeichnet,
daß die Modellplatte ein positives oder negatives Relief trägt, das das direkte Aufgipsen von Kiefermodellen erlaubt, ferner zur Aufnahme von Modellsystemen geeignet ist, wobei mittels Magnet oder anderer Fixationshilfen ein Abnehmen und sicheres Zurücksetzen der Gipsmodelle auf die Modellplatte möglich ist.

Eine weitere besonders bevorzugte Ausführungsform ist dadurch gekennzeichnet, daß die Basisplatte beidseitig mit je einem Führungsschlitz versehen ist.

Eine weitere besonders bevorzugte Ausführungsform ist dadurch gekennzeichnet, daß der Keil eine mit nach oben offenem Langloch versehene Neigungsfläche mit seitlichen Stegen aufweist, auf der das Fixationselement schlittenartig verfahrbar ist und im Bodenbereich eine zur Befestigung auf der Basisplatte dienendes Langloch angeordnet ist.

Eine weitere besonders bevorzugte Ausführungsform ist dadurch gekennzeichnet; daß die Keile vorzugsweise mittels Federvorspannung einer in der Schlitzführung der Basisplatte laufenden und durch eine Schraubenfräsung rotationsstabil geführten Schraube justierbar und über das Langloch des Keilbodens auf der Basisplatte durch eine Flügelmutter oder Rändelmutter fixierbar angeordnet sind.

Eine weitere besonders bevorzugte Ausführungsform ist dadurch gekennzeichnet, daß das Fixationselement als Schlittenblech mit einer im unteren Bereich abgebogenen Halteklaue ausgebildet ist.

Eine weitere besonders bevorzugte Ausführungsform ist dadurch gekennzeichnet, daß das Fixationselement als Schlittenblech mit einer im oberen Bereich abgebogenen Halteklaue ausgebildet ist.

Eine weitere besonders bevorzugte Ausführungsform ist dadurch gekennzeichnet, daß das Fixationselement als Schlittenblech mit im oberen und unteren Bereich abgebogenen Halteklauen ausgebildet ist.

Eine weitere besonders bevorzugte Ausführungsform ist dadurch gekennzeichnet, daß das Fixationselement eine Gewindebohrung aufweist.

Eine weitere besodnners bevorzugte Ausführungsform ist dadurch gekennzeichnet, daß das Fixationselement einen auf der Auflagefläche angeordneten Gewindestift aufweist.

Eine weitere besonders bevorzugte Ausführungsform ist dadurch gekennzeichnet, daß die Modellplatte trapezförmig ausgebildet ist und beidseitig eine zur Aufnahme der Halteklaue angeordnete Einfräsung aufweist.

Eine weitere besonders bevorzugte Ausführungsform ist dadurch gekennzeichnet, daß die Modellplatte einen zur Fixation der Modellplatte durch die Halteklaue angeordneten Steg aufweist.

Eine weitere besonders bevorzugte Ausführungsform ist dadurch gekennzeichnet, daß die Basisplatte exzentrisch ausgebildet ist, indem die seitlichen Führungsschlitze zum Fixationsgewinde versetzt angeordnet sind.

Anhand der beigefügten Zeichnungen, die ein besonders bevorzugtes Ausführungsbeispiel der Erfindung zeigen, wird dies nun näher erläutert. Dabei zeigen:

Figur 1
eine perspektivische Darstellung der erfindungsgemäßen Vorrichtung mit nur einem Keil; ein befestigtes Gipsmodell ist nicht eingezeichnet;

Figur 2
eine Seitenansicht der montierten erfindungsgemäßen Vorrichtung auf einem herkömmlichen Artikulatormodell;

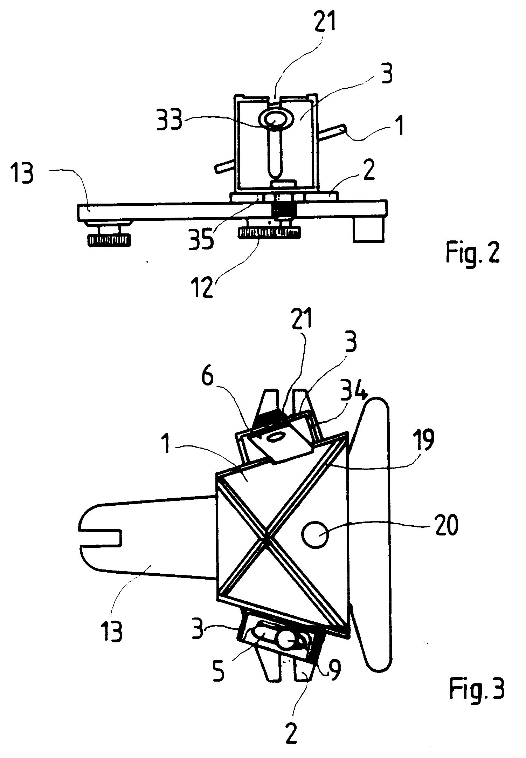

Figur 3
eine Draufsicht der Figur 2; wobei das vordere Fixationselement zur besseren Darstellung der Schraube im Langloch des Keils nicht dargestellt ist.

Figur 4
die Verbindungsschraube des Keilrahmens auf der Basisplattform;

Figur 5
eine Variante dieser Schraubenführung, hier ist eine Spiralfeder zur Federvorspannung eingezeichnet;

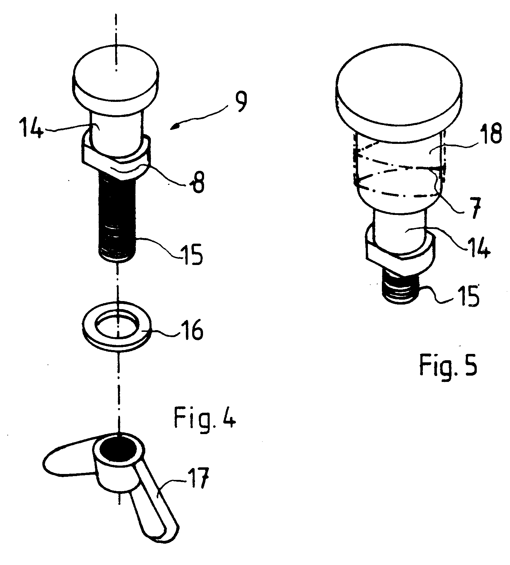

Figuren 6,6a und 6b
eine perspektivische Darstellung der Modellplatte, wobei 6a und 6b eine in Figur 5 dargestellte Einzelheit "x" in Varianten darstellen;

Figur 7
die Basisplatte;

Figuren 8-12
eine bevorzugte Ausführungsform des Keiles;

Figuren 13-15
Varianten des Fixationselementes.

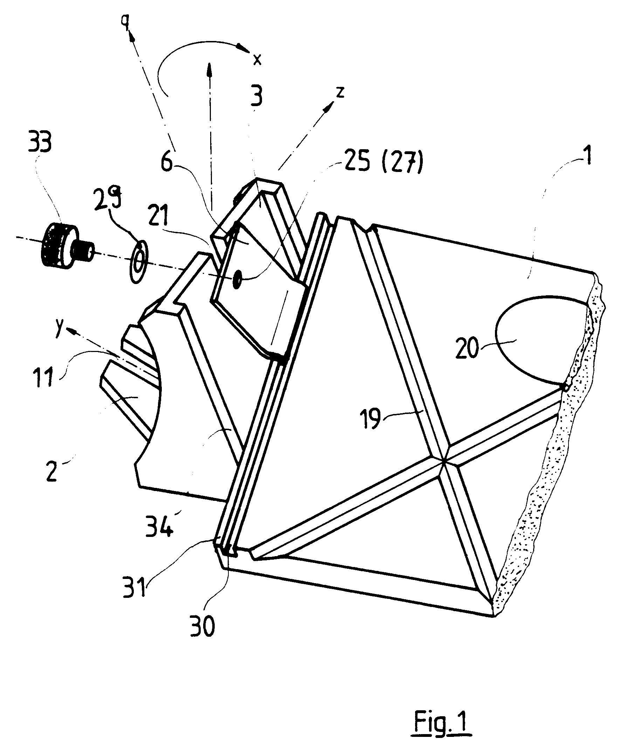

Figur 1 zeigt eine perspektivische Darstellung der erfindungsgemäßen Vorrichtung, zur Verdeutlichung mit nur einem Keil 3. Die Keile 3 sind längs im Führungsschlitz 11 der Basisplatte 2 nach "y" und durch ein hier nicht sichtbares Langloch quer nach "z" verfahrbar und axial um "x" verdrehbar. Somit kann der Keil 3 einer beliebigen räumlichen Lage der Modellplatte 1 angepaßt werden, die vorzugsweise trapezförmig ausgebildet ist.

Im nach oben offenen Langloch 21 des Keiles 3 ist schlittenförmig zwischen den Stegen 34 ein in Keilwirkrichtung verfahrbares Fixationselement 6, z.B. Fixationsblech 6, mittels Gewindebohrung 25 und Schrauben 33 oder angeordnetem Gewindestift 27 mittels Rändelmutter befestigt.

Durch das Zusammenspiel der beschriebenen Einzelelemente wird die Justierbarkeit der Modellplatte 1 in jeder erforderlichen Ebene ermöglicht und somit die gegebene Kieferstellung des Patienten exakt simuliert.

Die Figuren 2 und 3 zeigen eine Ansicht und eine Draufsicht der auf einer herkömmlichen Vorrichtung montierten Erfindung.

Die Basisplatte 2 ist mittels einer Rändelschraube 12 und ihrem Fixationsgewinde 35 auf einen herkömmlichen Artikulatortyp 13 montiert.

Die Modellplatte 1 ist zwischen den beiden Keilen 3 eingeklemmt und bietet somit eine gegen Verschiebung gesicherte Auflage der zu bearbeitenden Modelle.

In dem in Figur 3 sichtbaren Langloch 5 ist die zur Arretierung des Keils 3 dienende Verbindungs-Schraube 9 eingeführt, deren Ausbildung in Figur 4 näher beschrieben wird.

Ein besonderes Merkmal der Erfindung ist dadurch gekennzeichnet, daß die Keile 3 quer nach "y", längs nach "z" verfahrbar und um "x" axial verdrehbar sind (siehe Figur 1). Durch die weitere Möglichkeit der Verfahrbarkeit in Keilwirkrichtung nach "q" (Figur 1) der Fixationsbleche 6 wird die uneingeschränkte Justierung der Modellplatte 1 gewährleistet.

Figur 4 zeigt die Verbindungsschraube 9 zwischen Keil 3 und Basisplatte 2. Sie ist mit einer Flachfräsung 8 versehen, die im Führungsschlitz 10,11 der Basisplatte 2 geführt ist. Ein Drehmoment auf den Keil 3 durch Aktivierung der Verbindungsschraube 9 ist damit ausgeschlossen.

Der Schaft 14 dient zur Führung im Langloch 5 des Keiles 3. Auf das Gewinde 15 wird eine mit einer Scheibe 16 versehene Flügelmutter 17 oder Rändelmutter, gegebenenfalls mit Schlüsselfläche, aufgedreht und der Keil 3 damit fixiert.

Figur 5 zeigt eine Variante der zuvor beschriebenen Schraube, bei der der Schaft 18 höher gezogen und von einer Feder 7 umgeben ist, die eine Federvorspannung des Keils 3 auf der Basisplatte 2 gewährleistet.

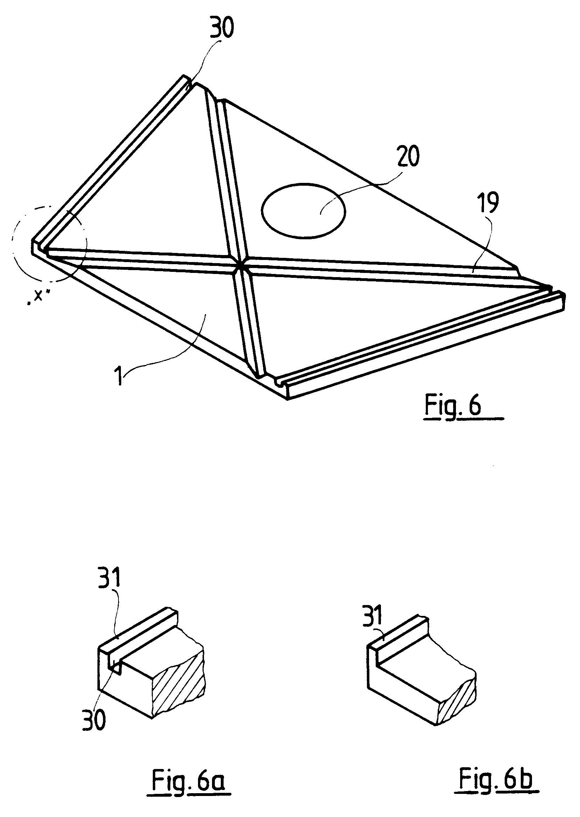

Figur 6 zeigt die perspektivische Darstellung der Modellplatte 1 mit Einfräsung 30. Weitere Einzelheiten zur direkten Fixation der Gipsmodelle, wie z.B. Retentionselemente für Gips oder Fixationshilfen für Modellsysteme sind angedeutet dargestellt.

Figur 6a und 6b zeigen ein Detail "x" aus Figur 6. So ist die Ausführung mit Steg 31 und Einfräsung 30 (Figur 6a) oder nur mit Steg 31 (Figur 6b) möglich.

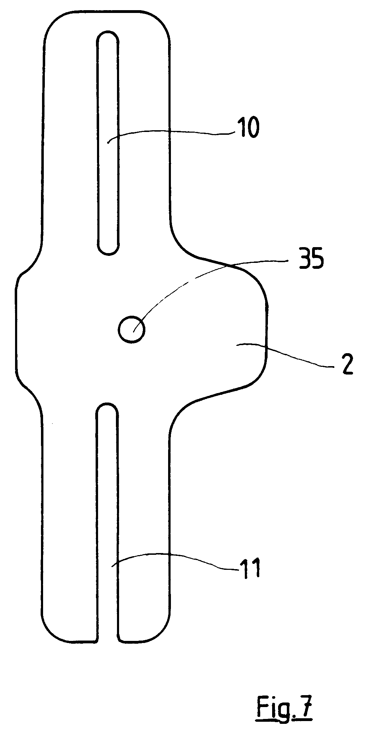

Figur 7 zeigt eine besonders bevorzugte Ausführungsform der Basisplatte 2, bei der die seitlichen Führungsschlitze offen 11 oder geschlossen 10 vorliegen können. Besonderes Merkmal ist es, daß die Basisplatte 2 exzentrisch ausgebildet ist, indem die Führungsschlitze zum Fixationsgewinde 35 versetzt sind. Dies erzeugt einen räumlichen Vorteil, indem die Basisplatte um 180° verdreht montiert werden kann.

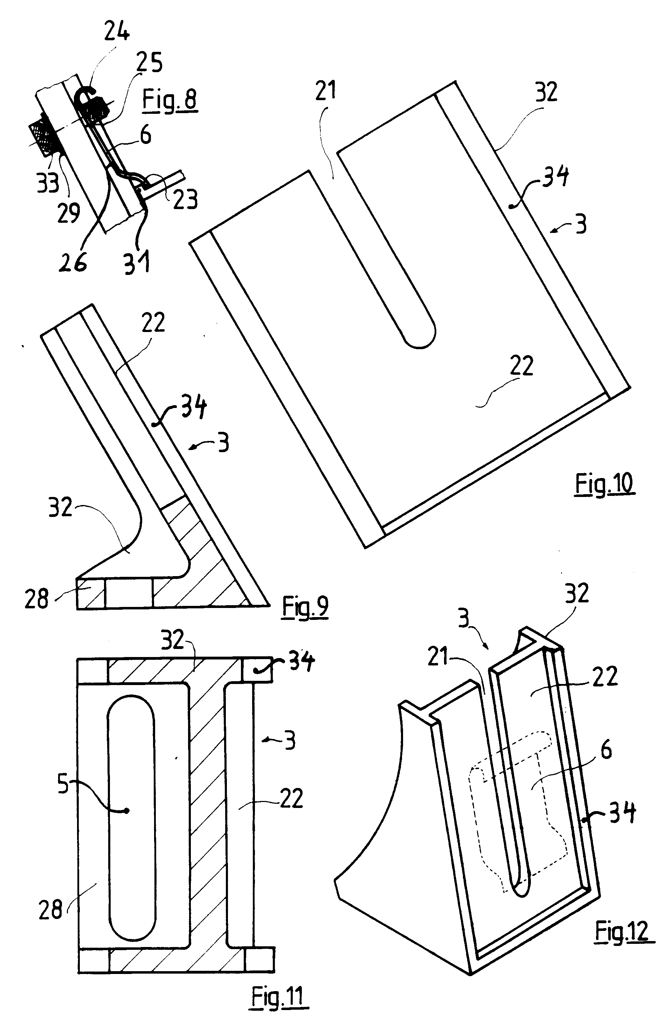

Die Figuren 8 bis 15 zeigen ein besonders bevorzugtes Ausführungsbeispiel des Keiles 3 und des dazugehörenden Fixationselementes 6. In dieser Ausführungsform weist der Keil 3 eine senkrecht zu den Seitenwänden 32 angeordnete Neigungsfläche 22 mit beidseitigem Steg 34 und einem nach oben geöffneten Langloch 21 auf, in dem das Fixationselement 6 geführt ist.

Die Arretierung des Fixationselementes 6 kann einerseits durch eine Rändelschraube 33 mit Unterlagsscheibe oder Federsteller 29 durchgeführt werden, wobei im Fixationselement 6 eine Gewindebohrung 25 eingearbeitet ist, andererseits ist die Anordnung eines Gewindestiftes 27 auf dem Fixationselement 6 möglich, wobei die Arretierung durch eine aufgedrehte Rändelmutter mit Unterlagsscheibe oder Federsteller 29 erfolgt.

Die Halteklauen 23, 24 greifen dabei in die Einfräsung 30 oder an den Steg 31 der Modellplatte 1 und fixieren diese durch Anziehen der Schraube 33 bzw. Rändelmutter 4, hier gegebenenfalls mit Schlüsselfläche.

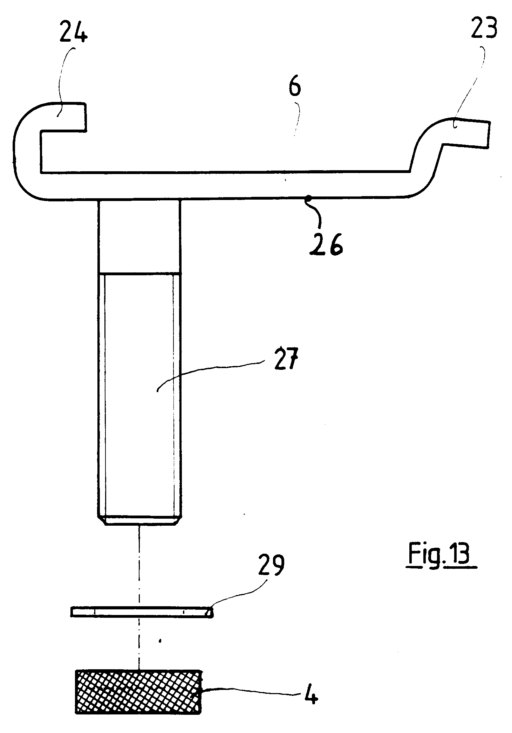

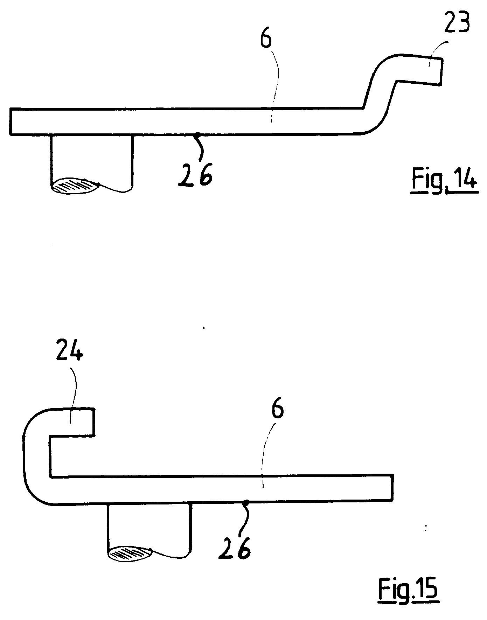

Das Fixationselement 6 weist verschiedene Ausführungsformen auf.
Gemäß einer bevorzugten Ausführungsform ist ein Fixationselement 6 mit oberer Halteklaue 24 (Figur 15) oder mit unterer Halteklaue 23 (Figur 14) und eine weitere Ausführungsform mit oberer Halteklaue 24 und unter Halteklaue 23 (Figur 13) geformt.

Die Erfindung ist oben anhand eines Ausführungsbeispiels beschrieben worden. Selbstverständlich soll dadurch der Schutzumfang der Erfindung nicht eingeschränkt werden. So sind anstatt der beschriebenen Keilform sowohl Keilrahmen in geschlossener als auch offener Ausführungsform denkbar, die zur Modellplattenfixation seitlich angeordnet und feststellbare Fixationselemente in Form von Fixationsblechen tragen, die mit Halteklauen versehen die Modellplatte feststellen. Auch Fixationshilfen, die nach dem Zug- und Druckschraubenprinzip arbeiten oder Fixationshilfen in Form von Schraubenspitzen, Bohrungen mit Einschlitzungen und darin verfahrbare und feststellbare Halteelemente sind möglich.

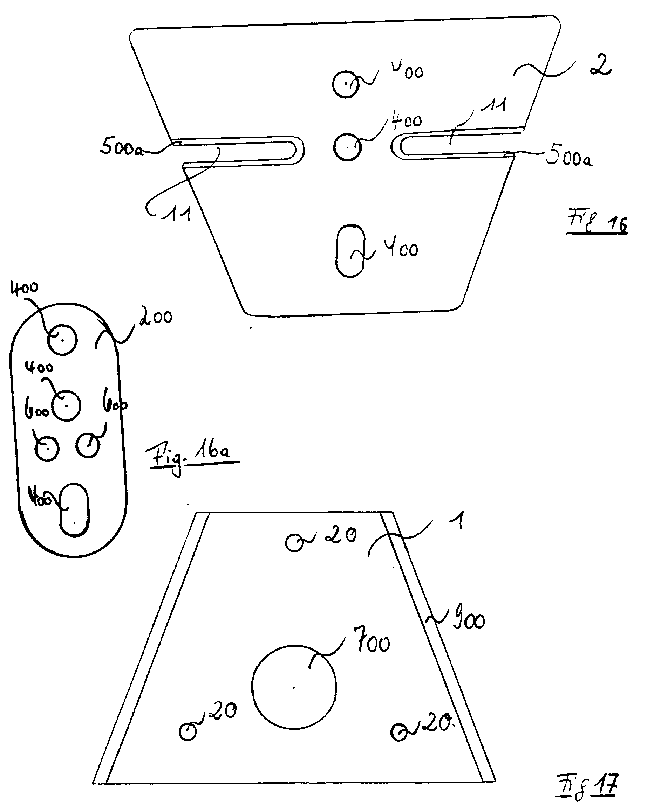

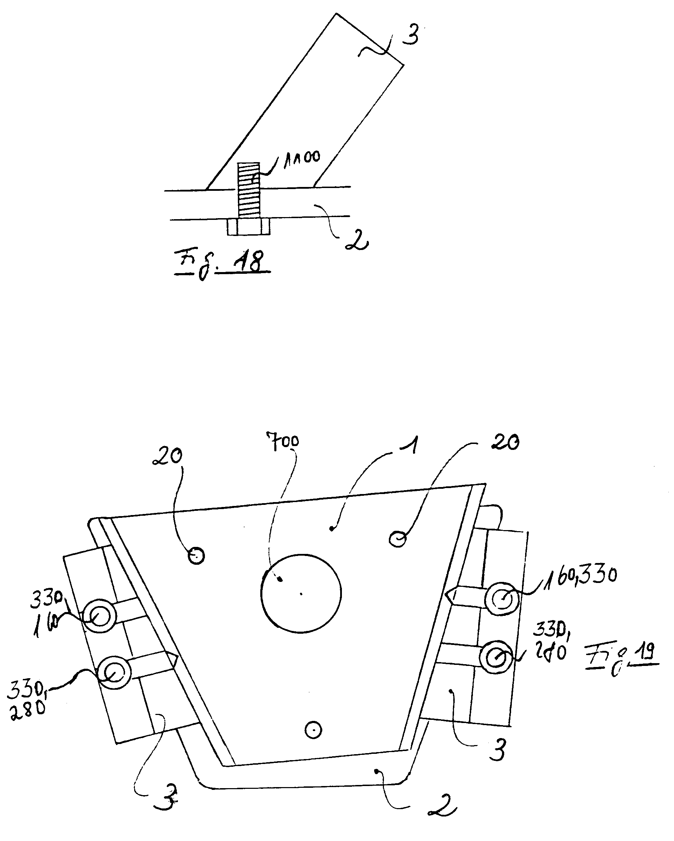

Eine weitere bevorzugte Ausführungsform der Erfindung ist in den beiliegenden Figuren 16 - 19 dargestellt. Danach ist diese bevorzugte Ausführugsform zum Einartikulieren von Kiefermodellen dadurch gekennzeichnet, daß die Vorrichtung aus einer Artikulator -Basisplatte 2 und einer Modellplatte 1 besteht, die durch mindestens zwei Keile 3 zueinander zuordenbar sind, wobei die Keile 3 in schlitzförmigen Führungen 11 der Basisplatte 2 bewegbar und bis zu einem seitlichen Anschlag 900 an der Modellplatte 1 verschiebbar sind und Zug- und Druckschrauben 160,280,330 zur Fixation angeordnet sind.

Nach einer weiteren bevorzugten Ausführungsform ist die erfindungsgemäße Vorrichtung gekennzeichnet durch die Zuordnung einer Abstandsplatte 200.

Nach einer weiteren bevorzugten Ausführungsform ist die erfindungsgemäße Vorrichtung dadurch gekennzeichnet, daß auf der Modellplatte 1 Fixationshilfen 20 für Modellsysteme angeordnet sind.

Nach einer weiteren bevorzugten Ausführungsform ist die erfindungsgemäße Vorrichtung dadurch gekennzeichnet, daß die Fixationshilfen 20 aus Bohrungen, Einschnitten, Schlitzen oder Schraubenspitzen bestehen.

Nach einer weiteren bevorzugten Ausführungsform ist die erfindungsgemäße Vorrichtung dadurch gekennzeichnet, daß auf der Modellplatte 1 ein Magnet 700 zur Modellbefestigung angeordnet ist.

Nach einer weiteren bevorzugten Ausführungsform ist die erfindungsgemäße Vorrichtung dadurch gekennzeichnet, daß der Keil 3 als Keilrahmen rhomboidförmig mit zentrischer Aussparung 115 ausgebildet ist, wobei die Grundfläche ein Langloch 5 und die schrägestellten Seitenwände 32 je eine Gewindebohrung 118 aufweisen.

Nach einer weiteren bevorzugten Ausführungsform ist die erfindungsgemäße Vorrichtung dadurch gekennzeichnet, daß die schlittenförmig verfahrbaren Fixationselemente 6 rhomboidförmig ausgebildet sind und vorzugsweise drei zur Modellplatte 1 hinweisende vorstehende Nasen 1113 aufweisen, sowie ein zur Verfahrbarkeit dienendendes Langloch 1114 aufweisen, wobei die den Nasen gegenüberliegende Begrenzung eine schräg kongruent zur Einfräsung 1112 des Keiles 3 , aufweisende Führungsbiegung- oder fräsung 1115 aufweist.

Nach einer weiteren bevorzugten Ausführungsform ist die erfindungsgemäße Vorrichtung dadurch gekennzeichnet, daß die schlittenförmigen Fixationselemente 6 mittels einer durch ihr Langloch 1114 führenden und in die Gewindebohrung 118 des Keils 113 eingreifenden vorzugsweise Rändelschraube 1120 nach Anschlag einer Nase 1113 an der Modellplatte 1 fixierbar sind.

Nach einer weiteren bevorzugten Ausführungsform ist die erfindungsgemäße Vorrichtung dadurch gekennzeichnet, daß die Modellplate 1 trapezförmig ausgebildet ist und beidseitig eine Verzahnung 1110 aufweist.

Nach einer weiteren bevorzugten Ausführungsform ist die erfindungsgemäße Vorrichtung dadurch gekennzeichnet, daß die Verzahnung aus einem mindestens teilweise verzahnten Steg 114 besteht.

Nach einer weiteren bevorzugten Ausführungsform ist die erfindungsgemäße Vorrichtung dadurch gekennzeichnet, daß der Keil 3 einen in der Keilwirkfläche verlaufenden Steg 119 aufweist, der in die Verzahnung 1110 der Modellplatte 1 eingreift.

Nach einer weiten bevorzugten Ausführungsform ist die erfindungsgemäße Vorrichtung dadurch gekennzeichnet, daß der Keil 3 beidseitig eine schräge Einfräsung 1112 aufweist, in der die Fixationselemente 6, vorzugsweise Fixationsbleche 6 schlittenförmig in Keilwirkung verfahrbar angeordnet sind, die ein Drehmoment auf die Fixationselemente 6 beim Aktivieren der Rändeschraube verhindern.

Nach einer weiteren bevorzugten Ausführungsform ist die erfindungsgemäße Vorrichtung dadurch gekennzeichnet, daß die schlittenförmigen Fixationzelemente 6 mittels einer durch ihr Langloch 1114 führenden und in die Gewindebohrung 118 des Keiles 3 eingreifenden vorzugsweise Rändelschraube 1120 nach Anschlag einer Nase 1113 an der Modellplatte 1 fixierbar sind.

Nach einer weiteren bevorzugten Ausführungsform ist die erfindungsgemäße Vorrichtung dadurch gekennzeichnet, daß die Keile 3 vorzugsweise mittels Federspannung 7 einer in der Basisplatte 2 laufenden und durch eine Flachfräsung 8 rotationsstabil geführten Verbindungsschraube 9 justierbar und auf der Basisplatte 2 durch eine Flügelmutter 17 fixierbar angeordnet sind.

Nach einer weiteren bevorzugten Ausführungsform ist die erfindungsgemäße Vorrichtung dadurch gekennzeichnet, daß die Basisplatte 2 mit beidseitigem zur Seite offenem Führungsschlitz 11 versehen ist.

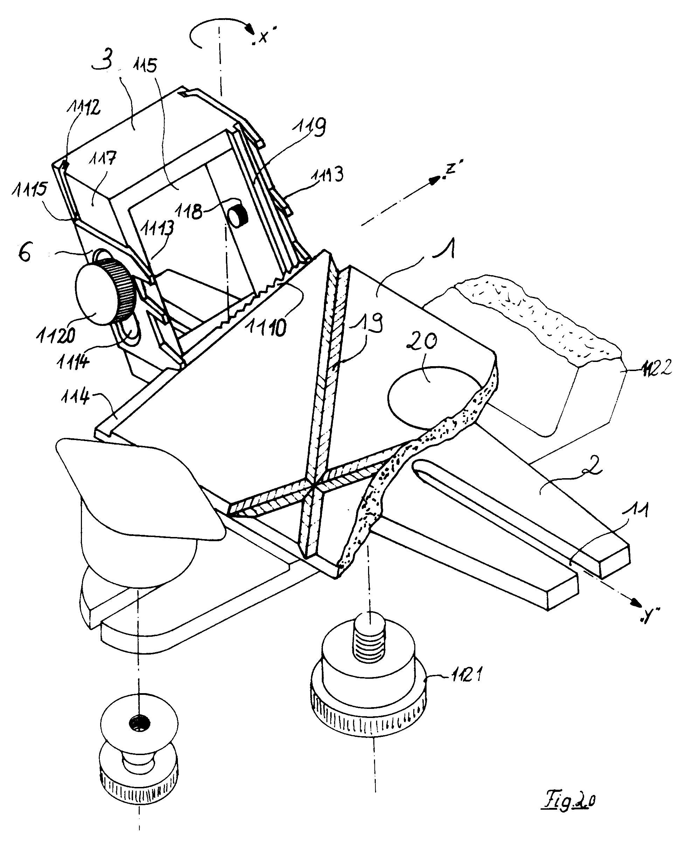

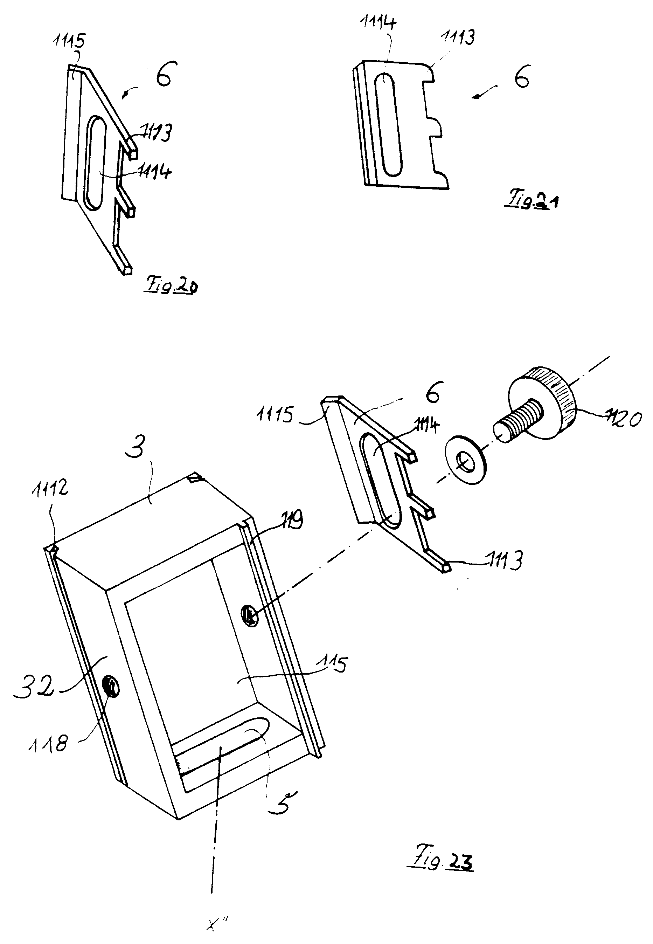

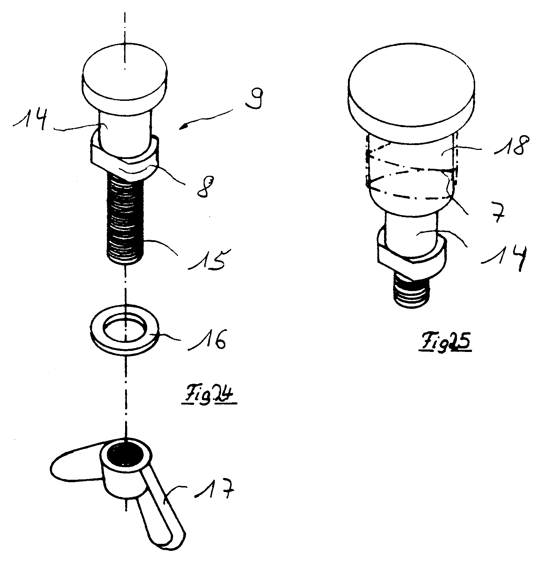

Diese weiteren bevorzugten Ausführungsformen sind in den beliegenden Figuren 19 - 25 dargestellt.

## Patentansprüche

1. Vorrichtung zum Einartikulieren von Kiefermodellen, mit einer räumlich justierbaren Modellplatte (1) und einer Artikulator-Basisplatte (2) dadurch gekennzeichnet, daß die Modellplatte (1) zwischen zwei auf der Basisplatte (2) in Längs- und Querrichtung verfahrbaren und axial verdrehbaren Keilen (3) angeordnet ist, weiche schlittenartig in der Neigung der Keile (3) verfahrbare Fixationselemente (6) aufweisen, die durch Verschraubung in der Neigung der Keile (3) in bestimmter Lage arretierbar sind, wobei die Modelplatte (1) an die Keile (3) angepreßt und fixiert wird.

2. Vorrichtung zum Einartikulieren von Kiefermodellen nach Anspruch 1, dadurch gekennzeichnet,

daß die Modellplatte (1) ein positives oder negatives Relief (19) trägt, das das direkte Aufgipsen von Kiefermodellen erlaubt, ferner zur Aufnahme von Modellsystemen geeignet ist, wobei mittels Magnet (700) oder anderer Fixationshilfen (19,20) ein Abnehmen und sicheres Zurücksetzen der Gipsmodelle auf die Modellplatte möglich ist.

3. Vorrichtung zum Einartikulieren von Kiefermodellen nach Anspruch 1-2,
dadurch gekennzeichnet,
daß die Basisplatte (2) beidseitig mit je einem Führungsschlitz (10, 11) versehen ist.

4. Vorrichtung zum Einartikulieren von Kiefermodellen nach Anspruch 1-3,
dadurch gekennzeichnet,
daß jeder Keil (3) eine mit nach oben offenem Langloch (21) versehene Neigungsfläche (22) mit seitlichen Stegen (34) aufweist, auf der das Fixationselement (6) schlittenartig verfahrbar ist, und im Bodenbereich (28) ein zur Befestigung auf der Basisplatte (2) dienendes Langloch (5) angeordnet ist.

5. Vorrichtung zum Einartikulieren von Kiefermodellen nach Anspruch 1-4,
dadurch gekennzeichnet,
daß die Keile(3)vorzugsweise mittels Federvorspannung (7) einer in der Schlitzführung (10; 11) der Basisplatte (2) laufenden und durch eine Schraubenfräsung (8) rotationsstabil geführten Verbindungsschraube (9) justierbar und über das Langloch (5) des Keilbodens (28) auf der Basisplatte (2) durch eine Flügelmutter (17) oder Rändelmutter fixierbar angeordnet sind.

6. Vorrichtung zum Einartikulieren von Kiefermodellen nach Anspruch 1-5,
dadurch gekennzeichnet,
daß das Fixationselement (6) als Schlittenblech mit einer im unteren Bereich abgebogenen Halteklaue (23) ausgebildet ist.

7. Vorrichtung zum Einartikulieren von Kiefermodellen nach Anspruch 1-6,
dadurch gekennzeichnet,
daß das Fixationselement (6) als Schlittenblech mit einer im oberen Bereich abgebogenen Halteklaue (24) ausgebildet ist.

8. Vorrichtung zum Einartikulieren von Kiefermodellen nach Anspruch 1-7,
dadurch gekennzeichnet,

daß das Fixationselement (6) als Schlittenblech mit im oberen und unteren Bereich abgebogenen Halteklauen (23, 24) ausgebildet ist.

9. Vorrichtung zum Einartikulieren von Kiefermodellen nach Anspruch 1-8,
dadurch gekennzeichnet,
daß das Fixationselement (6) eine Gewindebohrung (25) aufweist.

10. Vorrichtung zum Einartikulieren von Kiefermodellen nach Anspruch 1-9,
dadurch gekennzeichnet,
daß das Fixationselement (6) einen auf der Auflagefläche (26) angeordneten Gewindestift (27) aufweist.

11. Vorrichtung zum Einartikulieren von Kiefermodellen nach Anspruch 1-10,
dadurch gekennzeichnet,
daß die Modellplatte (1) trapezförmig ausgebildet ist und beidseitig eine zur Aufnahme der Halteklaue (23) oder (24) angeordnete Einfräsung (30) aufweist.

12. Vorrichtung zum Einartikulieren von Kiefermodellen nach Anspruch 1-11,
dadurch gekennzeichnet,
daß die Modellplatte (1) einen zur Fixation der Modellplatte (1) durch die untere (23) oder obere Halteklaue (24) angeordneten Steg (31) aufweist.

13. Vorrichtung zum Einartikulieren von Kiefermodellen nach Anspruch 1-12,
dadurch gekennzeichnet,
daß die Basisplatte (2) exzentrisch ausgebildet ist, indem die seitlichen Führungsschlitze (10,11) Fixationsgewinde (35) versetzt angeordnet sind.

14. Vorrichtung zum Einartikulieren von Kiefermodellen nach Anspruch 1 bis 13,
dadurch gekennzeichnet,
daß die Keile (3) in den Führungsschlitzen (10,11) der Basisplatte (2) bis zu einem seitlichen Anschlag an der Modellplatte (1) verschiebbar sind, und Zug- und Druckschrauben (160,280,330) zur Fixation angeordnet sind.

15. Vorrichtung zum Einartikulieren von Kiefermodellen nach Anspruch 1 - 14,
gekennzeichnet durch die Zuordnung der Abstandsplatte (200).

16. Vorrichtung zum Einartikulieren von Kiefermodellen nach Anspruch 1 - 15,
dadurch gekennzeichnet,

daß auf der Modellplatte (1) Fixationshilfen (19,20,700) für Modellsysteme angeordnet sind.

17. Vorrichtung zum Einartikulieren von Kiefermodellen nach Anspruch 1 - 16, dadurch gekennzeichnet, daß die Fixationshilfen (19,20,700) aus Bohrungen, Einschnitten Schlitzen oder Schraubenspitzen bestehen.

18. Vorrichtung zum Einartikulieren von Kiefermodellen nach Anspruch 1 - 17, dadurch gekennzeichnet, daß auf der Modellplatte (1) ein Magnet (700) zur Modellbefestigung angeordnet ist.

19. Vorrichtung zum Einartikulieren von Kiefermodellen nach einen der Ansprüche 1 bis 3, dadurch gekennzeichnet, daß der Keil (3) als Keilrahmen rhomboidförmig mit zentrischer Aussparung (115) ausgebildet ist, wobei die Grundfläche ein Langloch (5) und die schräggestellten Seitenwände (32) je eine Gewindebohrung (118) aufweisen.

20. Vorrichtung zum Einartikulieren von Kiefermodellen nach Anspruch 19, dadurch gekennzeichnet, daß die schlittenförmig verfahrbaren Fixationselemente (6) rhomboidförmig ausgebildet sind und vorzugsweise drei zur Modellplatte (1) hinweisende vorstehende Nasen (1113) aufweisen, sowie ein zur Verfahrbarkeit dienendes Langloch (1114) aufweisen, wobei die den Nasen (1113) gegenüberliegende Begrenzung eine schräg kongruent zur Einfräsung (1112) des Keils (3) , aufweisende Führungsbiegung- oder fräsung (1115) aufweist.

21. Vorrichtung zum Einartikulieren von Kiefermodellen nach Anspruch 19 oder 20, dadurch gekennzeichnet, daß die schlittenförmigen Fixationselemente (6) mittels einer durch ihr Langloch (1114) führenden und in die Gewindebohrung (118) des Keils (3) eingreifenden vorzugsweise Rändelschraube (1120) nach Anschlag einer Nase (1113) an der Modellplatte (1) fixierbar sind.

22. Vorrichtung zum Einartikulieren von Kiefermodellen nach einem der Ansprüche 19 bis 21, dadurch gekennzeichnet, daß die Modellplatte (1) trapezförmig ausgebildet ist und beidseitig eine Verzahnung (1110) aufweist.

23. Vorrichtung zum Einartikulieren von Kiefermodellen nach einem der Ansprüche 19 bis 22, dadurch gekennzeichnet, daß die Verzahnung aus einem mindestens teilweise verzahnten Steg (114) besteht.

24. Vorrichtung zum Einartikulieren von Kiefermodellen nach einem der Ansprüche 19 bis 23, dadurch gekennzeichnet, daß der Keil (3) einen in der Keilwirkfläche verlaufenden Steg (119) aufweist, der in die Verzahnung (1110) der Modellplatte (1) eingreift.

25. Vorrichtung zum Einartikulieren von Kiefermodellen nach einem der Ansprüche 19 bis 24, dadurch gekennzeichnet, daß der Keil (3) beidseitig eine schräge Einfräsung (1112) aufweist, in der die Fixationselemente (6), vorzugsweise Fixationsbleche schlittenförmig in Keilwirkung verfahrbar angeordnet sind, die ein Drehmoment auf die Fixationselemente beim Aktivieren der Rändelschraube verhindern.

26. Vorrichtung zum Einartikulieren von Kiefermodellen nach einem der Ansprüche 19 bis 25, dadurch gekennzeichnet, daß die schlittenförmigen Fixationselemente (6) mittels einer durch ihr Langloch (1114) führenden und in die Gewindebohrung (118) des Keiles (3) eingreifenden vorzugsweise Rändelschraube(1120) nach Anschlag einer Nase (1113) an der Modellplatte (1) fixierbar sind.

27. Vorrichtung zum Einartikulieren von Kiefermodellen nach einem der Ansprüche 19 bis 26, dadurch gekennzeichnet, daß die Keile (3)vorzugsweise mittels Federvorspannung (7) einer in der Basisplatte (2) laufenden und durch eine Flachfräsung (8) rotationsstabil geführten Verbindungsschraube (9) justierbar und auf der Basisplatte (2) durch eine Flügelmutter (17) fixierbar angeordnet sind.

28. Vorrichtung zum Einartikulieren von Kiefermodellen nach einem der Ansprüche 19 bis 27, dadurch gekennzeichnet, daß die Basisplatte (2) beidseitig mit zur Seite offenen Führungsschlitzen (11) versehen ist.

**Claims**

1. Device for mounting jawbone models in an articulator with a spatially adjustable model plate (1) and an articulator base plate (2), characterised in that the model plate (1) is disposed between two wedges (3) which can be moved in a longitudinal and transverse direction and can rotate axially on the base plate (2), which wedges have movable fixing elements (6) which can travel in a sliding manner in the inclination of the wedges (3) and can be held in a specific position by screwing in the inclination of the wedges (3), where the model plate (1) is pressed against the wedges (3) and fixed into position.

2. Device for mounting jawbone models in an articulator according to claim 1, characterised in that the model plate (1) carries a positive or negative relief (19) which allows the direct plastering of jawbone models and is also suitable for holding model systems, where by means of a magnet (700) or other fixing aids (19, 20) the plaster models can be removed and securely replaced on the model plate.

3. Device for mounting jawbone models in an articulator according to claims 1-2, characterised in that the base plate (2) is provided with a guide slot (10, 11) on either side.

4. Device for mounting jawbone models in an articulator according to claims 1-3, characterised in that each wedge (3) has an inclining surface (22) provided with a longitudinal hole (21) which opens upwards and with lateral webs (34), on which surface the fixing element (6) can be moved in a sliding manner and a longitudinal hole (5) is disposed in the floor area (28) for fixing to the base plate (2).

5. Device for mounting jawbone models in an articulator according to claims 1-4, characterised in that the wedges (3) can be adjusted, preferably by means of initial spring tension (7) of a connecting screw (9) running in the guide slot (10: 11) of the base plate (2) and provided with rotational stability by a screw groove (8), and are disposed so that they can be fixed into position on the base plate (2) via the longitudinal hole (5) of the wedge floor (28) by a wing nut (17) or knurled nut.

6. Device for mounting jawbone models in an articulator according to claims 1-5, characterised in that the fixing element (6) is designed as a metal carriage sheet with a downward-curving holding catch (23) in its lower part.

7. Device for mounting jawbone models in an articulator according to claims 1-6, characterised in that the fixing element (6) is designed as a metal carriage sheet with a downward-curving holding catch (24) in its upper part.

8. Device for mounting jawbone models in an articulator according to claims 1-7, characterised in that the fixing element (6) is designed as a metal carriage sheet with downward-curving holding catches (23, 24) in its upper and lower parts.

9. Device for mounting jawbone models in an articulator according to claims 1-8, characterised in that the fixing element (6) has a threaded bore (25).

10. Device for mounting jawbone models in an articulator according to claims 1-9, characterised in that the fixing element (6) has a set screw (27) disposed on the supporting surface (26).

11. Device for mounting jawbone models in an articulator according to claims 1-10, characterised in that the model plate (1) is designed with a trapezoidal shape and has a groove (30) disposed on both sides to accommodate the holding catch (23) or (24).

12. Device for mounting jawbone models in an articulator according to claims 1-11, characterised in that the model plate (1) has a web (31) disposed to fix the model plate (1) by means of the lower (23) or upper (24) holding catch.

13. Device for mounting jawbone models in an articulator according to claims 1-12, characterised in that the base plate (2) is designed as eccentric by offsetting the lateral guide slots (10, 11) in relation to the fixing thread (35).

14. Device for mounting jawbone models in an articulator according to claims 1 to 13, characterised in that the wedges (3) can be displaced in the guide slots (10, 11) of the base plate (2) as far as a lateral stop on the model plate (1), and tension and pressure bolts (160, 280, 330) are disposed for fixing purposes.

15. Device for mounting jawbone models in an articulator according to claims 1-14, characterised by the arrangement of the spacing plate (200).

16. Device for mounting jawbone models in an articulator according to claims 1-15, characterised in that fixing aids (19, 20, 700) for model systems are disposed on the model plate (1).

17. Device for mounting jawbone models in an articulator according to claims 1-16, characterised in that the fixing aids (19, 20, 700) consist of bores, notches, slots or screw points.

18. Device for mounting jawbone models in an articulator according to claims 1-17, characterised in that a magnet (700) is disposed on the model plate (1) to hold the model in place.

19. Device for mounting jawbone models in an articulator according to one of claims 1 to 3, characterised in that the wedge (3) is designed as a wedge frame in the shape of a rhomboid with a central recess (115), where the floor surface has a longitudinal hole (5) and the diagonally positioned side walls (32) each have a thread bore (118).

20. Device for mounting jawbone models in an articulator according to claim 19, characterised in that the fixing elements (6) which can be moved in sliding fashion are designed with a rhomboid shape and preferably have three projections (1113) pointing towards the model plate (1), and also a longitudinal hole (1114) as an aid to their mobility, where the limiting stop opposite the projections (1113) has a guide bend or groove (1115) diagonally congruent with the groove (1112) of the wedge (3).

21. Device for mounting jawbone models in an articulator according to claim 19 or 20, characterised in that the sliding-type fixing elements (6) can be fixed preferably by means of a knurled screw (1120) passing through their longitudinal hole (1114) and connecting with the threaded bore (118) of the wedge (3) following the engagement of a projection (1113) with the model plate (1).

22. Device for mounting jawbone models in an articulator according to one of claims 19 to 21, characterised in that the model plate (1) is designed as a trapezoidal shape with toothing (1110) on both sides.

23. Device for mounting jawbone models in an articulator according to one of claims 19 to 22, characterised in that the toothing comprises a web (114) which is at least partially denticulate.

24. Device for mounting jawbone models in an articulator according to one of claims 19 to 23, characterised in that the wedge (3) has a web (119) blending with the effective surface of the wedge, which engages with the toothing (1110) of the model plate (1).

25. Device for mounting jawbone models in an articulator according to one of claims 19 to 24, characterised in that the wedge (3) has a diagonal groove (1112) on both sides, in which the fixing elements (6), preferably sheet-metal fixing elements, are disposed so that they can move in sliding fashion with a wedge action, preventing any torque on the fixing elements when the knurled screw is turned.

26. Device for mounting jawbone models in an articulator according to one of claims 19 to 25, characterised in that the sliding-type fixing elements (6) can be fixed preferably by means of a knurled screw (1120) passing through their longitudinal hole (1114) and connecting with the threaded bore (118) of the wedge (3) following the engagement of a projection (1113) with the model plate (1).

27. Device for mounting jawbone models in an articulator according to one of claims 19 to 26, characterised in that the wedges (3) are disposed so that they can be adjusted preferably by means of initial spring tension (7) of a connecting screw (9) running in the base plate (2) and provided with rotational stability by a flat groove (8) and can be fixed into position on the base plate (2) by a wing nut (17).

28. Device for mounting jawbone models in an articulator according to one of claims 19 to 27, characterised in that the base plate (2) is provided on both sides with guide slots (11) which are open to the side.

**Revendications**

1. Dispositif pour l'articulation de modèles de mâchoires, comportant une plaque-modèle (1) réglable spatialement et une plaque de base (2) de l'élément d'articulation, caractérisé en ce que la plaque-modèle (1) est disposée entre deux clavettes (3) pouvant être déplacées dans les directions longitudinale et transversale et pouvant tourner axialement sur la plaque de base (2), lesquelles clavettes comportent des éléments de fixation (6), à la manière d'un coulisseau et sont mobiles dans l'inclinaison des clavettes (3), qui peuvent être bloqués dans une position définie par vissage dans l'inclinaison des clavettes (3), la plaque-modèle (1) étant pressée contre les clavettes (3) et fixée à celles-ci.

2. Dispositif pour l'articulation de modèles de mâchoires selon la revendication 1, caractérisé en ce que la plaque-modèle (1) comporte un relief positif ou négatif qui permet le moulage direct de modèles de mâchoires en plâtre et qui convient aussi pour recevoir des systèmes de modèles, un démoulage et une remise en place sûre des modèles en plâtre sur la plaque-modèle étant possible au moyen d'un aimant (700) ou d'autres auxiliaires de fixation (19, 20).

3. Dispositif pour l'articulation de modèles de mâchoires selon la revendication 1 ou 2, caractérisé en ce que la plaque de base (2) est pourvue des deux côtés d'une fente de guidage (10, 11).

4. Dispositif pour l'articulation de modèles de mâchoires selon une des revendications 1 à 3, caractérisé en ce que chaque clavette (3) comporte une surface inclinée (22), pourvue d'un trou oblong (21) ouvert vers le haut et comportant des montants latéraux (34), sur laquelle l'élément de fixation (6) peut être déplacé à la manière d'un coulisseau, et un trou oblong (5) servant à la fixation de la plaque de base (2) est disposé dans la zone de fond (28).

5. Dispositif pour l'articulation de modèles de mâchoires selon la revendication 1 ou 2, caractérisé en ce que les clavettes (3) peuvent être réglées au moyen d'une précontrainte élastique (7) d'une vis d'assemblage (9) guidée dans la fente de guidage (10, 11) de la plaque de base (2) et maintenue de façon résistante à la rotation au moyen d'un fraisage hélicoïdal (8), et elles sont disposées de façon à pouvoir être fixées sur la plaque de base (2) par un écrou à oreilles (17) ou par un écrou moleté, au moyen du trou oblong (5) à la base (28) de la clavette.

6. Dispositif pour l'articulation de modèles de mâchoires selon une des revendications 1 à s, caractérisé en ce que l'élément de fixation (6) est conformé en une tôle de coulisseau comportant une griffe de retenue (23) recourbée dans la zone inférieure.

7. Dispositif pour l'articulation de modèles de mâchoires selon une des revendications 1 à 6, caractérisé en ce que l'élément de fixation (6) est conformé en une tôle de coulisseau comportant une griffe de retenue (24) recourbée dans la zone supérieure.

8. Dispositif pour l'articulation de modèles de mâchoires selon une des revendications 1 à 7, caractérisé en ce que l'élément de fixation (6) est conformé en une tôle de coulisseau comportant des griffes de retenue (23, 24) recourbées dans les zones supérieure et inférieure.

9. Dispositif pour l'articulation de modèles de mâchoires selon une des revendications 1 à 8, caractérisé en ce que l'élément de fixation (6) comporte un taraudage (25).

10. Dispositif pour l'articulation de modèles de mâchoires selon une des revendications 1 à 9, caractérisé en ce que l'élément de fixation (6) comporte une vis sans tête (27) disposée sur la surface d'appui (26).

11. Dispositif pour l'articulation de modèles de mâchoires selon une des revendications 1 à 10, caractérisé en ce que la plaque-modèle (1) est réalisée sous la forme d'un trapèze et comporte, des deux côtés, un fraisage (30) disposé pour recevoir la griffe de retenue (23) ou (24).

12. Dispositif pour l'articulation de modèles de mâchoires selon une des revendications 1 à 11, caractérisé en ce que la plaque-modèle (1) comporte un montant (31) disposé à travers la griffe de retenue inférieure (23) ou la griffe de retenue supérieure (24) pour la fixation de la plaque-modèle (1).

13. Dispositif pour l'articulation de modèles de mâchoires selon une des revendications 1 à 12, caractérise en ce que la plaque de base (2) est conformée de façon excentrique, les fentes de guidage latérales (10, 11) étant disposées de façon décalée par rapport au filet de fixation (35).

14. Dispositif pour l'articulation de modèles de mâchoires selon une des revendications 1 à 13, caractérisé en ce que les clavettes (13) situées dans les fentes de guidage (10, 11) de la plaque de base (2) peuvent être déplacées contre la plaque-modèle (1) jusqu'à une butée latérale, et il est prévu des vis de traction et de pression (160, 280, 330) pour la fixation.

15. Dispositif pour l'articulation de modèles de mâchoires selon une des revendications 1 à 14, caractérisé par l'agencement de la plaque d'espacement (200).

16. Dispositif pour l'articulation de modèles de mâchoires selon une des revendications 1 à 15, caractérisé en ce que des auxiliaires de fixation (19, 20, 700) sont disposés sur la plaque-modèle pour des systèmes de modèles.

17. Dispositif pour l'articulation de modèles de mâchoires selon une des revendications 1 à 16, caractérisé en ce que les auxiliaires de fixation (19, 20, 700) sont formés de trous, d'encoches, de fentes ou de pointes de vis.

18. Dispositif pour l'articulation de modèles de mâchoires selon une des revendications 1 à 17, caractérisé en ce qu'un aimant (700) est disposé sur la plaque-modèle (1) pour fixer le modèle.

19. Dispositif pour l'articulation de modèles de mâchoires selon une des revendications 1 à 3, caractérisé en ce que la clavette (3) est conformée en un cadre en coin rhomboïdal présentant un évidement central (115), la surface de base comportant un trou oblong (5) et chacune des parois latérales inclinées (32) comportant un taraudage (118).

20. Dispositif pour l'articulation de modèles de mâchoires selon la revendication 19, caractérisé en ce que les éléments de fixation (6), mobiles et en forme de coulisseau, sont de forme rhomboïdale et comportent de préférence trois nez saillants (1113) en direction de la plaque-modèle (1), ainsi qu'un trou oblong (1114) servant au déplacement, la limite située en face des nez (1113) présentant une courbure ou un fraisage de guidage (1115) coïncidant de façon oblique avec le fraisage (1112) de la clavette (3).

21. Dispositif pour l'articulation de modèles de mâchoires selon la revendication 19 ou 20, caractérisé en ce que les éléments de fixation en forme de coulisseau (6) peuvent être bloqués, après butée d'un nez (1113) contre la plaque-modèle (1), au moyen d'une vis (1120) de préférence moletée, traversant son trou oblong (1114) et s'engageant dans le taraudage (118) de la clavette (3).

22. Dispositif pour l'articulation de modèles de mâchoires selon une des revendications 19 à 21, caractérisé en ce que la plaque-modèle (1) est réalisée sous la forme d'un trapèze et comporte un engrenage (1110) des deux côtés.

23. Dispositif pour l'articulation de modèles de mâchoires selon une des revendications 19 à 22, caractérisé en ce que l'engrenage est formé d'un montant (114) denté au moins partiellement.

24. Dispositif pour l'articulation de modèles de mâchoires selon une des revendications 19 à 23, caractérisé en ce que la clavette (3) comporte un montant (119) s'étendant sur la surface d'action de la clavette et qui s'engage dans l'engrenage (1110) de la plaque-modèle (1).

25. Dispositif pour l'articulation de modèles de mâchoires selon une des revendications 19 à 24, caractérisé en ce que la clavette (3) comporte un fraisage oblique (1112) des deux côtés, dans lequel les éléments de fixation (6), de préférence des tôles de fixation, sont disposés de façon mobile en forme de coulisseau claveté, qui empêche un moment de torsion sur les éléments de fixation lors de l'actionnement de la vis moletée.

26. Dispositif pour l'articulation de modèles de mâchoires selon une des revendications 19 à 25, caractérisé en ce que les éléments de fixation (6) en forme de coulisseau peuvent être bloqués, après butée d'un nez (1113) contre la plaque-modèle (1), au moyen d'une vis (1120) de préférence moletée, traversant son trou oblong (1114) et s'engageant dans le taraudage (118) de la clavette (3).

27. Dispositif pour l'articulation de modèles de mâchoires selon une des revendications 19 à 26, caractérisé en ce que les clavettes (3) peuvent être réglées au moyen de la précontrainte élastique (7) d'une vis d'assemblage (9) s'étendant dans la plaque de base (2) et guidée à travers un fraisage plat (8) de façon résistante à la rotation, et sont disposées de façon à pouvoir être bloquées sur la plaque de base (2) au moyen d'un écrou à oreilles (17).

28. Dispositif pour l'articulation de modèles de mâchoires selon une des revendications 19 à 27, caractérisé en ce que la plaque de base (2) est pourvue, des deux côtés, de fentes de guidage (11) ouvertes dans la direction latérale.

Fig.1

Fig. 2

Fig. 3

Fig. 4

Fig. 5

Fig. 6

Fig. 6a

Fig. 6b

Fig. 7

EP 0 276 495 B1

Fig.8

Fig.10

Fig.9

Fig.11

Fig.12

17

Fig.13

6

23

26

<u>Fig. 14</u>

24

6

26

<u>Fig. 15</u>

500a    500    400    2

400

11    500a

11    Fig. 16

400

400    200

400

600    600

Fig. 16a

400

1

20

900

700

20    20

Fig. 17

20

_Fig. 18_

_Fig. 19_

Fig 20

1115

6

1113

1114

_Tig.20_

1114

1113

6

_Tig.21_

1115

6

1114

120

3

1112

119

1113

32

118

115

5

x"

_Tig.23_

23

14

9

8

15

16

*Fig24*

18

7

14

*Fig25*

17